Europäisches Patentamt

European Patent Office

Office européen des brevets

(19)

(11)  EP 1 715 602 A1

(12)  EUROPEAN PATENT APPLICATION

(43) Date of publication:
  25.10.2006  Bulletin 2006/43

(51) Int Cl.:
  *H04B 10/17* (2006.01)

(21) Application number: 05290891.0

(22) Date of filing: 21.04.2005

(84) Designated Contracting States:
  AT BE BG CH CY CZ DE DK EE ES FI FR GB GR
  HU IE IS IT LI LT LU MC NL PL PT RO SE SI SK TR
  Designated Extension States:
  AL BA HR LV MK YU

(71) Applicant: ALCATEL
  75008 Paris (FR)

(72) Inventors:
  • Charlet, Gabriel
    91190 Villiers-le-Bacle (FR)
  • Simonneau, Christian
    92160 Antony (FR)

(74) Representative: Kohler Schmid Möbus
    Patentanwälte
    Ruppmannstrasse 27
    70565 Stuttgart (DE)

Remarks:
    Amended claims in accordance with Rule 86 (2) EPC.

(54)  **Network management system for an optical network**

(57)  In a network management system for an optical network, wherein the optical network comprises at least one optical fiber line (1) for transmitting an optical signal having a plurality of optical amplifiers (2) and the network management system comprises a central management unit (5) for controlling the optical amplifiers (2), the management unit (5) periodically determines the output power ($P_{out}$) of each optical amplifier (2) taking into account noise power and signal power of the optical signal, and subsequently sets the output power ($P_{out}$) of each optical amplifier (2) to a target output power so that at least the signal power at an output end (7) of the fiber line (2) is set to a predetermined value.

OSNR>30dB/0.1nm  $P_{out}$= 0 dBm

OSNR=15dB/0.1nm  $P_{out}$= 10 dBm

Fig. 1

EP 1 715 602 A1

**Description**

Background of the invention

The invention relates to a network management system for an optical network, wherein the optical network comprises at least one optical fiber line for transmitting an optical signal having a plurality of optical amplifiers and the network management system comprises a central management unit for controlling the optical amplifiers.

Such a network management system is known from US 6,690,505 B1. In optical networks as described above, it is desirable to have a high optical signal to noise ratio (OSNR) at the end of the optical transmission line.

Adjustable optical amplifiers (e.g. of the Erbium-doped fiber type, EDFAs) in the optical fiber lines of such networks are typically operated either in constant output power mode or constant gain operation (AGC).

In constant output power mode, the total output power of each of the amplifiers can be set to the same target output value. In this way, it is not possible to maintain the signal power of the optical signal at a constant level, because only the total power of the optical signal is kept constant, but the ratio of noise in the total power of the optical signal increases along the transmission line. Consequently, using this operation mode, the noise power can be much larger than the signal power at the end of the optical transmission line, especially when few channels are transmitted, leading to a poor OSNR. When constant output power mode is used, the decrease of the signal power when the proportion of noise to the total power increases can be tuned manually by experts, but this is not a practical way as it is a complex task to make upgrades (add new channels) later on.

Optical transmission systems working in constant gain operation (AGC) will be widely used in the future instead of the optical amplifiers working in constant output power mode used in current products. The problem with the AGC mode is that one needs to know perfectly well the span loss (including loss due to the connectors) between the optical amplifiers in order to keep the optical signal power per channel constant from span to span. The exact measure of the span loss is expensive, time consuming, and difficult due to problems with connector loss, ageing of the fiber, repairs etc. Moreover, such a measurement is very sensitive to measurement error (an error of 0.5 dB of each power measurement leads up to 1 dB in span loss determination, and in most cases, these errors are cascaded along 20 to 40 amplifiers !).

Object of the invention

It is the object of the invention to provide a network management system for an optical network of the above-mentioned kind which is capable of producing a signal with a good OSNR at an output end of the fiber line.

Short description of the invention

This object is achieved by a network management system of the above-mentioned kind wherein the management unit periodically determines the output power of each optical amplifier taking into account noise power and signal power of the optical signal, and subsequently sets the output power of each optical amplifier to a target output power so that the signal power at least at the output end of the fiber line is set to a predetermined value.

In order to set the signal power at the end of the fiber line to e.g. 0 dBm, a first approach is to estimate the noise power of each amplifier within the management unit (in function of the span loss and the number of fiber spans before each amplifier). In this way, the optical signal-to-noise ratio (OSNR) of the optical signal can be calculated at the output of each amplifier. In function of the OSNR, the target output power of each amplifier can be set such that the signal power at the output of each optical amplifier is set to a nominal, predetermined value. Consequently, the signal power at the end of the fiber line is also set to this value.

If, for example, a constant signal power of 0 dBm is desired at the output of each optical amplifier, the output power of the optical amplifiers has to increase along the optical fiber line due to noise accumulation, especially if few channels are used (which is normally the case at the installation of WDM systems). In this case, the output power has to be set to 0 dBm for the first amplifier (no noise being present) and may be set to e.g. 10 dBm for the last optical amplifier of the fiber line due to the noise accumulation. A second approach for setting the signal power at the end of the optical fiber line to a predetermined value which may be combined with or used independently of the first one is described below.

In a highly preferred embodiment, the management unit adjusts the gain of each optical amplifier working in constant gain operation for setting the target output power of each optical amplifier. The operation mode of the optical amplifiers should be constant gain mode during nearly the whole lifetime of the optical network. In such a way, the amplifiers adapt themselves to fluctuations of the channel number (due to optical add-drop multiplexing, OADM) and in case of fiber failure. The gain setting needs to be readjusted periodically during the lifetime of the system for taking system changes e.g. due to fiber ageing (or when the fiber has been cut and then spliced again) into account.

It is possible to switch to constant output power mode for the determination of the gain setting at the installation and also every day, week or month. However, switching to constant output power mode it is not necessary for the setting of the gain, as the output power can be simply monitored and then the gain can then be readjusted to the target output power. The gain should be slowly (> 10 ms) set to avoid overshoot and the gain of all the amplifiers should not be adjusted simultaneously. Also, the adjustment has to be done in the right order, i.e. from the first amplifier to the last one and not in the reverse order.

In a preferred embodiment, the management unit determines the noise power of each optical amplifier in dependence of the input power to the optical amplifiers, the noise figure of the optical amplifiers, and the bandwidth of the optical amplifiers. The span loss (including losses due to additional components, e.g. dispersion-compensating fibers, DCF) can be estimated by calculating the difference between the output power of the previous amplifier and the input power of the amplifier for which the noise power has to be estimated.

In a preferred embodiment, the predetermined value of the signal power is adapted to the span loss for each optical amplifier. In fact, the signal power can be adjusted at a different level for each optical amplifier, depending primarily on the span loss (more power for a large span loss, less power for a low span loss, see European patent application 04 292 110.3 by G. Charlet and J.-C. Antona). In such a way, the signal power is maintained at a preferred level for each optical amplifier so that a decrease of the OSNR can be avoided.

In a highly preferred embodiment, the management unit adds the same offset to the gain of each optical amplifier such that the signal power at the end of the optical fiber line is set to the predetermined value. In this way, a second approach for setting the signal power is provided, which may be advantageously combined with the one described above.

The gain of each amplifier is first set to a certain level (to compensate span loss and DCM loss) using, for example, the above approach. At the end of the optical fiber line, the signal power corresponds to the nominal signal power if the gain has been perfectly set to compensate for the loss. If the signal is not at the correct level (because losses have been underestimated or overestimated), a correction on the gain of each amplifier is applied by adding a constant value to the gain. If the signal power at the end of the line still differs from the predetermined value after this procedure, the management unit can add a constant gain to the amplifiers again as many times as is necessary till the predetermined value is reached.

In a preferred embodiment, the management unit controls the emitter of the optical signal for adjusting the signal power of each individual channel of the optical signal. By controlling the emitter, the fact that the gain of the EDFAs is not flat can be taken into account, so that an individual tuning of each channel is possible.

In another preferred embodiment the optical amplifiers are EDFAs and the management unit sets the gain of the EDFAs taking into account their ASE level. In order to achieve a nominal, constant channel power even when the EDFAs are loaded with only one channel, the ASE generated in each EDFA has to be calibrated. In such a way, each EDFA "knows" the ASE level it generates depending on the input power and the gain.

In another advantageous embodiment, the management unit controls an optical add-drop multiplexer arranged between two successive optical fiber lines in such a way that unused channels of the optical signal are dropped in order to minimize noise accumulation.

The invention also relates to a server implementing a network management system as described above. The server may be used as the central management unit, the network management system being operated as a software running on the server.

The invention further relates to an interface between the server and the optical amplifiers of the optical network. Such an interface is needed for exchanging data between the server and the amplifiers of the optical network.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

Drawing

The invention is shown in the drawing, wherein

Fig. 1    shows an optical fiber line of an optical network having a plurality of optical amplifiers and a central management unit for controlling the optical amplifiers,

Fig. 2    shows two subsequent optical fiber lines being interconnected by an optical add-drop multiplexer (OADM),

Fig. 3a, b    show the output power of an optical signal in dependence of the wavelength at the output of the OADM, the latter dropping (b) or not dropping (a) unused channels,

Fig. 4a, b    show a diagram of the signal power (a) and the OSNR (b) of a channel in dependence of the optical amplifier (EDFA) number for a first simulation,

Fig. 5a, b    show the same diagrams as shown in Fig. 4 for a second simulation; and

Fig. 6    shows the average gain of an optical amplifier in dependence of the input power being necessary to produce a signal gain of 23 dB taking amplified spontaneous emission (ASE) into account.

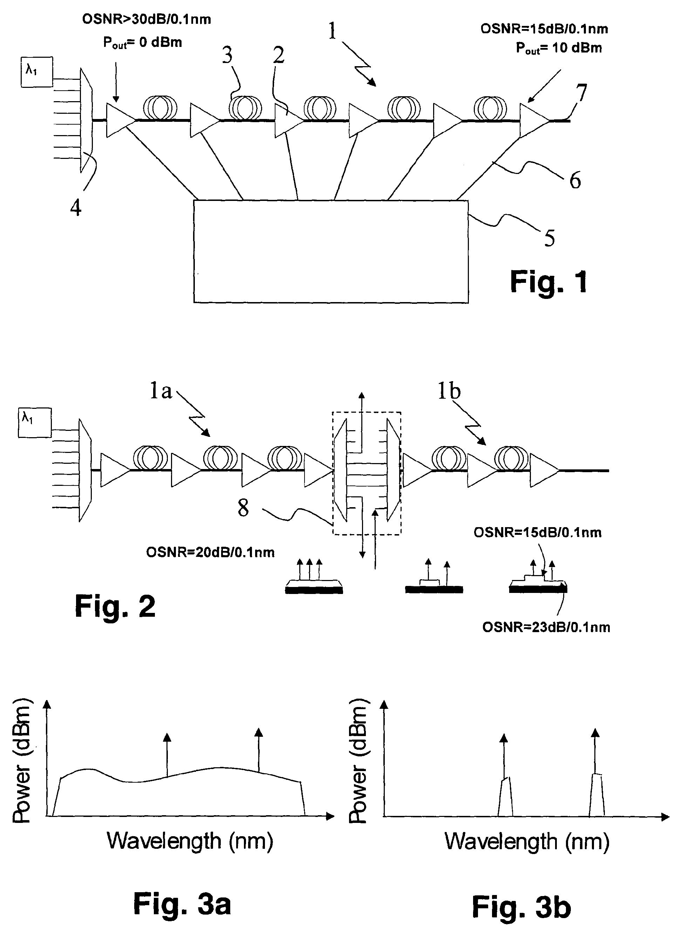

**Fig. 1** shows an optical fiber line **1** with six successively arranged optical amplifiers **2** of the erbium-doped fiber amplifier (EDFA) type. The optical amplifiers **2** are interconnected by fiber spans **3.** The fiber line 1 is used for transmitting an optical signal from an emitter to a receiver (not shown). At the emitter side of the optical fiber line 1, a multiplexer **4** is arranged which combines several wavelength channels with individual wavelengths $\lambda_1$, ... to form a wavelength division multiplexed (WDM) signal as an input to the optical fiber line 1.

A central management unit **5** of a network management system is provided for the optical network, being connected to each of the optical amplifiers 2 through communication paths **6.** The management unit 5 may be a server running a software for controlling and adjusting the amplifiers 2.

The management unit 5 is operated in such a way that a desired signal power at an output end **7** of the optical fiber line 1 is reached.

In a first approach for attaining this aim, the noise power of the optical signal is estimated by the management unit 5 in function of the input power of the optical amplifiers 2, their noise figure (contribution of the amplifiers 2 to the noise at their respective outputs) and their bandwidth, the calculation being explained in detail below.

The total output power of each amplifier 2 is the sum of the signal power and the noise power of the optical signal at its output. When a number $N_{ch}$ of identical channels is present in the optical signal, the output power Pout is related to the noise power by the following formula:

$$P_{out} = N_{ch} \times \text{nominal Channel power} + \text{noise power}.$$

If, for example, a single channel is considered with an OSNR of 15dB/0.1nm considering a 38 nm bandwidth amplifier, the total noise power is 10dB higher than the signal power. Consequently, in order to have an output power per channel of 1 mW (0 dBm), the output power of the amplifier has to be set to 11 mW (10.4 dBm) if the estimated noise power is 10 mW (10 dBm). If two channels are considered, the output power has to be set to 12mW (10.8 dBm) (i.e. only 0.4 dB more than for the single channel case).

The noise power is very easy to estimate if the noise spectrum is considered flat. If one amplifier is considered, the OSNR expressed in dB/0.1nm (logarithmic scale) is:

$$OSNR(dB/0.1nm) = 58 + P_{in} - NF.$$

($P_{in}$: input power to the amplifier for one channel, NF: noise figure)

The constant 58 is not related to the bandwidth of 38nm, but is used to determine the OSNR within a bandwidth of 0.1 nm, taking also into account the optical frequency and the Planck constant. If the bandwidth is 38 nm wide, i.e. 380 times wider than the reference bandwidth used for OSNR measurement (0.1 nm), then the ratio of signal power can be easily determined thanks to the previous OSNR determination.

If N identical amplifiers are cascaded, the OSNR is given by the following formula:

$$OSNR(dB/0.1nm) = 58 + P_{in} - NF - 10 \log(N).$$

For determining the ratio of the signal power divided by the noise power it is convenient to express the OSNR in a linear scale, calculated as follows:

$$\text{OSNR linear scale} = 10^{\wedge}(\text{OSNR(dB/0.1nm)/10}),$$

i.e. an OSNR of 15 dB/0.1nm corresponds to a ratio of 31.6 in linear scale. The ratio is then expressed as:

$$\text{total signal power / total noise power} = N_{ch}/(10 \times 1/ \text{OSNR linear scale} \times \text{bandwidth (nm))}.$$

The output power can then be expressed in terms of the above ratio as:

$$P_{out} = N_{ch} \times \text{nominal channel power (1+ Ratio total signal power /total noise power)}.$$

Once the target output power is known, the gain of the amplifiers 3 can be adjusted in order to reach this output power, so that the signal power per channel can be kept constant even if the total noise power increases along the fiber line. In Fig. 1, the output power of the first of the optical amplifiers 2 is set to an output power of 0 dBm with an OSNR > 30 dB /0.1 nm, whereas the last of the optical amplifiers 2 is set to an output power of 10 dBm with an OSNR of only 15 dB/0.1nm. In such a way, the signal power at the output of each optical amplifier along the fiber line is the same.

**Fig. 2** shows two optical fiber lines **1a, 1b** with the same design as the fiber line 1 of Fig. 1. The first optical fiber line 1 a is connected to the second optical fiber line 1 b through an optical add-drop multiplexer (OADM) **8**. The OADM 8 comprises a demultiplexer and a multiplexer for adding/dropping of channels. The total noise power of the optical signal depends on the bandwidth of the noise and is therefore impacted by the OADM 8, as is shown by the three small graphs representing the noise power before the OADM 8, immediately after the OADM 8 and at the output end of the second optical fiber line 1 b in dependence of the wavelength.

The noise power of the first optical fiber line 1a can be calculated by the following formula:

$$\text{Noise power} = \text{noise level} \times \text{bandwidth (considering flat noise)}.$$

When OADM is applied, the summation of the various OSNR over the various bandwidths as shown in Fig. 2 has to be taken into account in order to calculate the noise power, i.e. the general formula for calculating the noise power is:

$$\text{Noise power} = \Sigma \text{ noise level} \times \text{bandwidth}.$$

It is therefore advantageous in a WDM system (metro or long haul) using reconfigurable OADM (ROADM), if the OADM 8 drops all the channels which are not used to remove as much noise as possible. When only two wavelengths (shown in **Fig. 3b**) go through the ROADM 8, the 78 pixels (out of 80) of the reconfigurable OADM 8 should be activated to drop the noise, otherwise the noise of the unused channels is added to the signal, as shown in **Fig. 3a** and the noise power is much larger than the signal power.

Thanks to the adjustment of the OADM 8, the noise accumulation can be minimized, and hence the proportion of noise power compared to signal power in the total output power of the optical amplifiers is minimized. Even if the output power of the amplifiers is calculated by this solution, a fast transient suppression of the optical amplifiers can be implemented by using constant gain mode (gain calculated from the ratio of input and output power seen before the transient).

With reference now to Fig, 1, in order to improve the results of the approach described above, a second approach can be carried through, which will be described below. It is supposed that the optical fiber line 1 is designed in order to have 0 dBm per channel which ensures to reach the planned distance. At the installation, the gain of each EDFA 2 is set at the value estimated by the approach described above which should ensure 0 dBm/channel at the output end 7 of the last EDFA 2 of the optical fiber line 1. If an overestimation or underestimation is produced (which is possible) the signal power per channel at the output end 7 of the fiber line will be higher or lower than expected.

In the second approach, it is proposed that the management unit 5 modifies the gain of all EDFAs 2 with the same offset in order to reach the channel power (and OSNR) target value.

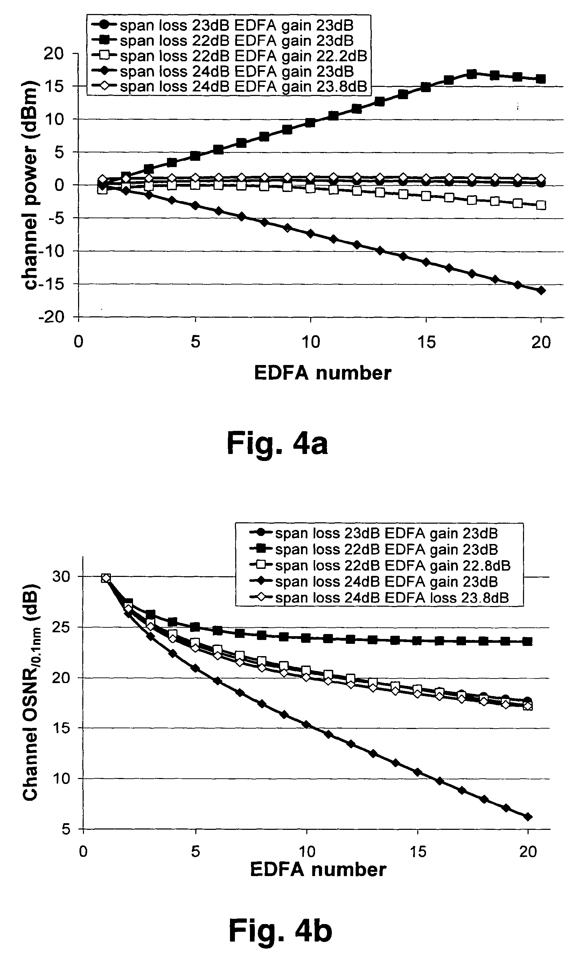

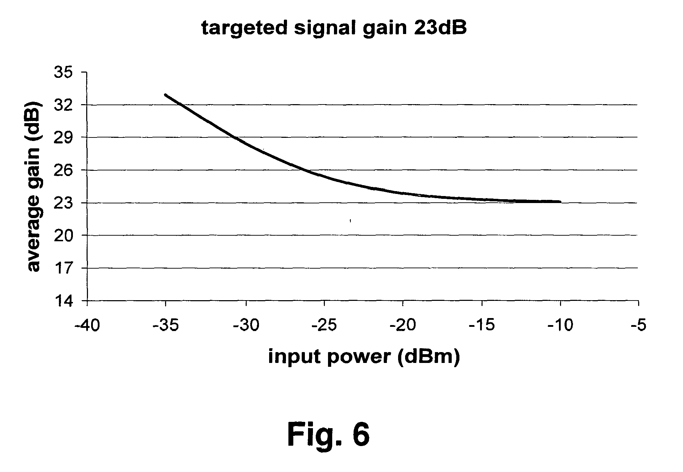

In order to illustrate this method, several configurations of a simulation are displayed in **Fig 4.** The simulation concerns a transmission system with twenty EDFAs. All EDFAs are working in a constant gain operation and there ASE have been calibrated as explained below (cf. Fig. 6). The target channel power at the end of the fiber line is 0 dBm. Simulations are made at the installation of the system, i.e. with one channel at 1530 nm.

Fig. 4a shows the channel power evolution at the output of the EDFAs along the line, whereas Fig. 4b indicates the corresponding OSNR (in dB/0.1nm). Several configurations have been simulated, which are represented in Fig. 4 by plots with different symbols:

● : each span loss is 23 dB and the EDFA gain is 23 dB. In this case the channel power is maintained at the correct value along the line.

■ : each span loss is 22 dB and the EDFA gain is 23 dB, i.e. each span loss has been overestimated. In that case the channel power increases along the line leading to higher non-linear effects. In the simulation, the output power of the EDFAs has been limited to 21 dBm, so that after EDFA number seventeen, the channel power does not increase. At the end the channel power is ~16 dBm instead of 0 dBm.

□ : an offset has been set to all EDFAs. This offset is -16/20= - 0.8dB. The gain of all EDFAs is then 22.2 dB. In this case, the channel power nearly reaches the targeted channel power (-3 dBm) and OSNR (only 0.5 dB below the ideal case).

♦ : each span loss is 24dB and the EDFA gain is 23dB, i.e. each span loss has been underestimated. In that case the channel power decreases along the line leading to a lower OSNR. At the end of the line, the channel power is ~ -16 dBm instead of 0 dBm.

◊ : an offset has been added to all EDFAs. This offset is16/20=0.8 dB. The gain of all EDFAs is now 23.8 dB. In this case, it can clearly be seen that the channel power also nearly reaches the targeted channel power.

From the above simulations, it is evident that adding a constant gain to all of the optical amplifiers leads to an improved OSNR of the optical signal when the same error is made for each fiber span.

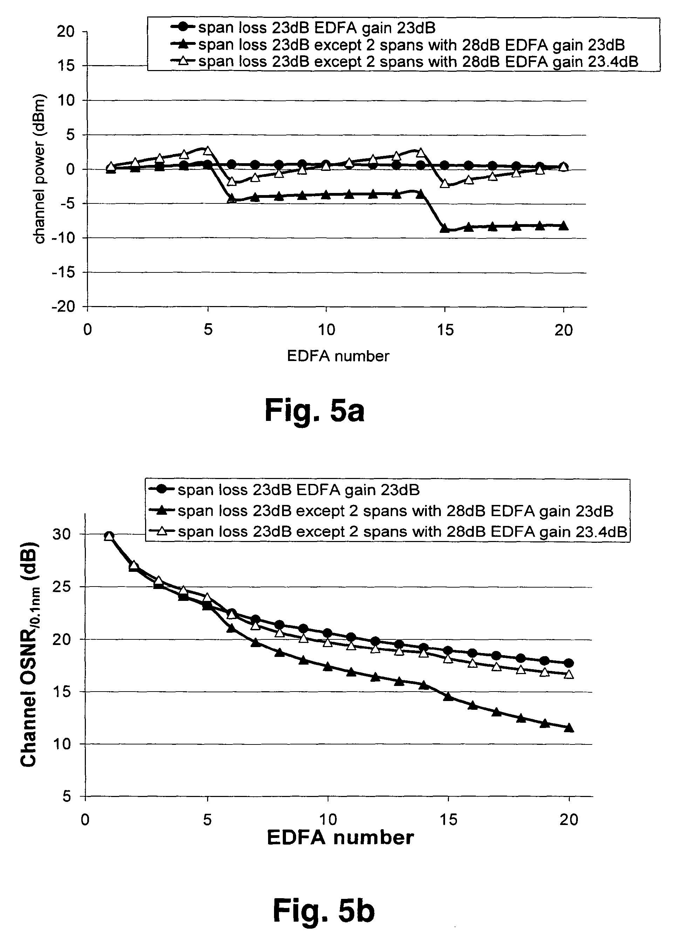

As this is an unlikely situation, the results of a simulation in the case where an underestimation of 5 dB is made for span five and fourteen (28 dB loss instead of 23 dB) are shown in three plots in **Fig. 5:**

● : each span loss is 23 dB and the EDFA gain is 23 dB. In that case the channel power is maintained at the correct value along the line.

▲ : each span loss is 23 dB except span 5 and 14 where the loss is 28 dB and the EDFA gain is 23 dB. In that case the channel power at the end of the line is - -8 dBm instead of 0 dBm.

△ : an offset has been set to all EDFAs. This offset is 8/20=0.4 dB. The gain of all EDFAs is now 23.4 dB. It is evident that the channel power nearly reaches the target channel power and OSNR in this case.

In summary, for the simulations shown in Fig. 4 and Fig. 5, all configurations with the corrected gain enable to reach the expected channel power and OSNR or at least to come very close to these values. If a more precise tuning is necessary, either the same method can be carried through a second time, or the channel power can be precisely tuned at the emitter side. The latter is preferable since the gain of the EDFAs is not flat an each channel will necessitate an individual tuning. The addition of a constant gain to all the amplifiers can be used in combination with the estimation of the noise power as described above, but it is also possible to use this method independently of the first one.

With reference now to **Fig. 6,** in order to achieve a constant channel power even when the EDFAs are loaded with only one channel, the ASE generated in each EDFA needs to be calibrated, so that each EDFA "knows" the ASE level it generates depending on the input power and the target gain. When the input power is low, the EDFA is able to determine the average gain which is necessary to reach in order to get the targeted signal gain. An example of such a calibration is displayed in Fig. 6. It can be observed that below an input power of -15 dBm, the EDFA has to take into account it own ASE in order to be able to achieve the desired gain on the signal (here 23 dB).

In summary, by following either one or a combination of the approaches described above, the signal power at the output end of a fiber line can be set to a predetermined value by adjusting the gain of the amplifiers such that a target output power is reached.

It is yet not sufficient to perform the gain setting described above only once at the installation of the optical network, as it needs to be readjusted also during the lifetime of the system, as the network may change due to e.g. fiber ageing, or when the fiber has been cut and then spliced again. The readjustment of the gain setting has therefore to be repeated periodically, e.g. every day, week or month. Before a modification of the gain setting is carried through, the output power can be monitored or alternatively the amplifiers can be switched to constant output power mode. The measured output power is then compared to the target output power and subsequently readjusted if necessary.

Thanks to the network management system as described above, the signal output power of the EDFAs is optimized to maintain the signal power at a nominal power. This is not possible in a standard configuration wherein the output power is maintained at a constant value along the line, as the signal level could be much too low at the end of the line which would lead to a large degradation of the OSNR.

Moreover, WDM systems are never installed with full capacity. The adjustment of EDFA power at the beginning of the liftetime and during upgrades is important (in order to avoid to deploy a technical expert to do the installation and the upgrade manually). The network management system as described above allows to increase the output power of the amplifiers when the channel count is increased (e.g. during the upgrade of the system).

**Claims**

1. Network management system for an optical network, wherein the optical network comprises at least one optical fiber line (1; 1 a, 1 b) for transmitting an optical signal having a plurality of optical amplifiers (2) and the network management system comprises a central management unit (5) for controlling the optical amplifiers (2),
   **characterized in that**
   the management unit (5) periodically determines the output power (Pout) of each optical amplifier (2) taking into account noise power and signal power of the optical signal, and subsequently sets the output power (Pout) of each optical amplifier (2) to a target output power so that at least the signal power at an output end (7) of the fiber line (1; 1 a, 1 b) is set to a predetermined value.

2. Network management system according to claim 1, wherein the management unit (5) adjusts the gain of each optical amplifier (2) working in constant gain operation for setting the target output power of each optical amplifier (2).

3. Network management system according to claim 1, wherein the management unit (5) determines the noise power of each optical amplifier (2) in dependence of the input power to the optical amplifiers (2), the noise figure of the optical amplifiers (2), and the bandwidth of the optical amplifiers (2).

4. Network management system according to claim 1, wherein the predetermined value of the signal power is adapted to the span loss for each optical amplifier (2).

5. Network management system according to claim 1, wherein the management unit (5) adds the same offset to the gain of each optical amplifier (2) such that the signal power at the output end (7) of the optical fiber line (1; 1a, 1 b) is set to a predetermined value.

6. Network management system according to claim 1, wherein the management unit (5) controls the emitter of the optical signal for adjusting the signal power of each individual channel of the optical signal.

7. Network management system according to claim 1, wherein the optical amplifiers (2) are EDFAs and the management unit (5) sets the gain of the EDFAs taking into account their ASE level.

8. Network management system according to claim 1, wherein the management unit (5) controls an optical add-drop multiplexer (8) arranged between two successive optical fiber lines (1 a, 1 b) in such a way that unused channels of the optical signal are dropped.

9. Server implementing a network management system according to claim 1.

10. Interface between the server according to claim 9 and the optical amplifiers of the optical network.

**Amended claims in accordance with Rule 86(2) EPC.**

**1.** Network management system for an optical network, wherein the optical network comprises at least one optical fiber line (1; 1a, 1b) for transmitting an optical signal having a plurality of optical amplifiers (2), and wherein the network management system determines the output power ($P_{out}$) of each optical amplifier (2) taking into account noise power and signal power of the optical signal,
**characterized in that**
the network management system comprises a central management unit (5) for controlling the optical amplifiers (2) working in constant gain operation, wherein the management unit (5) periodically sets the output power ($P_{out}$) to a target output power by adjusting the gain of each optical amplifier (2) so that at least the signal power at an output end (7) of the fiber line (1; 1a, 1b) is set to a predetermined value.

**2.** Network management system according to claim 1, wherein the management unit (5) determines the noise power of each optical amplifier (2) in dependence of the input power to the optical amplifiers (2), the noise figure of the optical amplifiers (2), and the bandwidth of the optical amplifiers (2).

**3.** Network management system according to claim 1, wherein the predetermined value of the signal power is adapted to the span loss for each optical amplifier (2).

**4.** Network management system according to claim 1, wherein the management unit (5) adds the same offset to the gain of each optical amplifier (2) such that the signal power at the output end (7) of the optical fiber line (1; 1a, 1b) is set to a predetermined value.

**5.** Network management system according to claim 1, wherein the management unit (5) controls the emitter of the optical signal for adjusting the signal power of each individual channel of the optical signal.

**6.** Network management system according to claim 1, wherein the optical amplifiers (2) are EDFAs and the management unit (5) sets the gain of the EDFAs taking into account their ASE level.

**7.** Network management system according to claim 1, wherein the management unit (5) controls an optical add-drop multiplexer (8) arranged between two successive optical fiber lines (1a, 1b) in such a way that unused channels of the optical signal are dropped.

**8.** Server implementing a network management system according to claim 1.

**9.** Interface between the server according to claim 9 and the optical amplifiers of the optical network.

**Fig. 1**

**Fig. 2**

**Fig. 3a**

**Fig. 3b**

**Fig. 4a**

**Fig. 4b**

**Fig. 5a**

**Fig. 5b**

**targeted signal gain 23dB**

**Fig. 6**

**European Patent Office**

**EUROPEAN SEARCH REPORT**

Application Number

EP 05 29 0891

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 545 799 B1 (MCNAMARA THOMAS W ET AL) 8 April 2003 (2003-04-08) * column 3, line 62 - column 5, line 45 * * claim 1 * * figures 1-3 * | 1-10 | H04B10/17 |
| X | US 2002/186459 A1 (DEGRANGE JAMES E ET AL) 12 December 2002 (2002-12-12) * paragraph [0024] - paragraph [0029] * * paragraph [0044] * * paragraph [0060] - paragraph [0072] * * paragraph [0092] * * figures 2-4 * | 1-10 | |
| X | US 5 703 711 A (HAMADA ET AL) 30 December 1997 (1997-12-30) * column 1, line 41 - column 2, line 12 * * column 3, line 32 - line 55 * * claim 22 * | 1-10 | |

TECHNICAL FIELDS SEARCHED (Int.Cl.7)

H04B
H01S

The present search report has been drawn up for all claims

| Place of search | Date of completion of the search | Examiner |
|---|---|---|
| The Hague | 15 September 2005 | Vaquero, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 29 0891

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2005

| Patent document cited in search report | | Publication date | Patent family member(s) | | Publication date |
|---|---|---|---|---|---|
| US 6545799 | B1 | 08-04-2003 | NONE | | |
| US 2002186459 | A1 | 12-12-2002 | NONE | | |
| US 5703711 | A | 30-12-1997 | JP | 2687933 B2 | 08-12-1997 |
| | | | JP | 8334798 A | 17-12-1996 |

EPO FORM P0459

For more details about this annex : see Official Journal of the European Patent Office, No. 12/82

**EP 1 715 602 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6690505 B1

- EP 04292110 A, G. Charlet and J.-C. Antona

15